# EUROPEAN PATENT APPLICATION

(11) **EP 2 418 589 A1**
(43) Date of publication of application: **15.02.2012**
(21) Application number: 10761487.7
(22) Date of filing: 09.02.2010
(51) Int. Cl.: G06F 17/30, G06F 3/16, G10L 15/00, G10L 15/22, G10L 15/28

(54) **RETRIEVAL DEVICE**

(30) Priority: 06.04.2009 JP 2009092138
(71) Applicant: Mitsubishi Electric Corporation, Tokyo 100-8310 (JP)
(72) Inventor: OKATO, Yohei, Tokyo 100-8310 (JP); HANAZAWA, Toshiyuki, Tokyo 100-8310 (JP)
(74) Representative: Pfenning, Meinig & Partner GbR
(86) International application number: PCT/JP2010/051874
(87) International publication number: WO 2010/116785

(57) **Abstract**

In conventional retrieval techniques for narrowing down a candidate when there are a plurality of candidates as retrieval results, a method results in a huge number of candidates in order to prevent omission of candidates, whereby the administration cost is increased, and another method involves always processing all candidates, whereby the processing time becomes longer and the response performance is lowered. Retrieval history storage means stores a retrieval history including a content input from input means and a candidate list, narrowing-down method selecting means selects, according to the content of the stored retrieval history, a narrowing-down method from a method of limiting search targets to top-ranked candidates and a method of performing a search again based on inputs made in the past, candidate score update means sets, from the search history, a search candidate and a score thereof according to the selected narrowing-down method, and updates a candidate score based on a character string received from the input means with reference to an index for search, candidate determining means determines a candidate to be presented based on a number of candidates and score distribution which are updated, and candidate presenting means presents, to the user, the determined candidate with reference to name information data.

## Description

### Technical Field

The present invention relates to a retrieval device for retrieving, for example, facility names in response to an input based on pattern recognition, such as a text input or an input voice.

### Background Art

A name search technology based on a character string index is for retrieving names which appear with respect to morphemes of a search target or partial character strings of character N-grams thereof. JP 3665112 B discloses a method of calculating the score of each candidate based on matching of partial character strings, and setting top-ranked candidates as search results. This method allows a fuzzy search in which, even if a character string does not exactly match an input, similar candidates are extracted. In the fuzzy search, a plurality of candidates having different scores need to be held, and hence the used memory capacity and the amount of computation become large compared to an exact match search.

The size of the character string index used for reference as described above is proportional to the number of search units of search target character strings. For this reason, in the case where the search target is large, it is necessary to locate the character string index used for reference in secondary storage, such as a digital versatile disk (DVD) or a hard disk. In this case, a processing time required for reading from the secondary storage becomes long. The number of readings from a dictionary corresponds to the number of kinds of different partial character strings. Thus, in the case of a short-length input such as a name, the number of readings is substantially proportional to the length of the input character string. Further, in general, in the fuzzy search, a plurality of candidates having different scores need to be held, and hence a larger memory capacity and a larger amount of computation are required compared to the exact match search.

By combining the above-mentioned search method and a speech recognition technology, it is possible to realize a search performed by a voice input. JP 2008-262279 A discloses, as a search method using a voice, a search technique which takes into account a difference between a unit adapted for speech recognition and a unit for a search. In this case, a search is performed by taking into account erroneous recognition at the time of speech recognition, and hence the number of candidates further increases.

When a plurality of candidates are retrieved as a result of a search, it is desired that the candidates be narrowed down by an additional input from the user. JP 3134204 B discloses a method which allows, through an instruction operation, a selection between a hierarchy search mode, in which narrowing-down is performed by setting, as a base set, a set of documents obtained as a result of an immediately preceding search, and a universe search mode, in which every search is performed by always setting, as a base set, a fixed set of documents.

### Citation List

### Patent Literature

Patent Literature 1: JP 3665112 A, Method and device for character string retrieval
Patent Literature 2: JP 2008-262279 A, Voice search device
Patent Literature 3: JP 3134204 B, Information search terminal apparatus and information display and input/output method in information search terminal apparatus

### Summary of Invention

### Technical Problem

As for the above-mentioned two narrowing-down methods disclosed in JP 3134204 B of Patent Literature 3, the user needs to designate the narrowing-down method. Further, it is conceivable to combine the above-mentioned methods with the fuzzy search. In this case, the respective narrowing-down methods have the following problems.

In the above-mentioned hierarchy search mode, the narrowed-down candidate list is held as a search history, and, with respect to an additional input for narrowing-down, processing is performed only on targets in the candidate list. Accordingly, the index is referred to with respect only to the additional input. In addition, the number of targets for calculation is small, resulting in a smaller amount of computation.
However, once a candidate has been excluded from the list, there is no possibility that the candidate is included again in the list, and hence it is necessary to prevent candidates from being excluded form the list. For example, when a given facility name in Tokyo is set as a search target, an enormous number of candidates are retrieved for the input of "Tokyo". In this case, there occurs a problem that, despite the fact that it is difficult for the user to check all the candidates, the search history contains a large number of candidates, resulting in high management cost. In addition, when there is an upper limit on the number of candidates to be held, some candidates may be excluded from the list. In consideration of a plurality of narrowing-downs and cancellation of a narrowing-down, a search history corresponding to a plurality of searches needs to be stored, resulting in high management cost.

In the above-mentioned universe search mode, every time a search is performed again, the search is performed again with respect to the base set of documents. Accordingly, it is only necessary to hold an input from the user as a search history, and hence cost for managing the search history is low. However, all inputs need to be processed by always targeting all candidates. For this reason, the number of readings from the index is large, and the number of candidates of calculation targets is also large. Hence, the processing time becomes longer, and the responsiveness decreases.

Further, in the case of a search adapted for a voice input, in JP 2008-262279 A, a recognition dictionary which covers the entire search target is created. This dictionary does not take into account a result of narrowing-down, and thus the recognition rate is not improved at the time of narrowing-down.

In general, the user makes an input so that the search target can be narrowed down, and hence it is unusual that an enormous number of candidates are retrieved. In view of the above, the present invention has an object to make an improvement in average search time without increasing management cost at the time of a narrowing-down search. In addition, the present invention has an object to improve recognition accuracy at the time of narrowing-down by voice.

### Solution to Problems

A retrieval device according to the present invention includes:
input means for receiving an input from a user, and outputting a search request;
search history storing means for storing a search history containing a content of the input from the input means and a candidate list;
narrowing-down method selecting means for selecting a narrowing-down method from two methods according to a content of the search history stored in the search history storing means in response to the search request, the two methods being a method of limiting search targets to top-ranked candidates and a method of performing a search again based on inputs made in a past;
candidate score updating means for setting, from the search history, a search candidate and a score thereof according to the selected narrowing-down method, and updating a candidate score based on a character string received from the input means with reference to an index for search;
candidate determining means for determining a candidate to be presented based on a number of candidates and a score distribution which are updated by the candidate score updating means; and
candidate presenting means for presenting, to the user, the candidate determined by the candidate determining means with reference to name information data.

### Advantageous Effects of Invention

According to the retrieval device of the present invention, the narrowing-down method is selected from the two methods according to the content of the search history stored in the search history storing means. Those two methods are the method of limiting search targets to top-ranked candidates and the method of performing a search again based on inputs made in a past. Therefore, when the number of candidates having high adequacy is small, the narrowing-down is performed by limiting the range of the target, with the result that a computation time is shortened. On the other hand, when the number of candidates having high adequacy is large, the input character strings in the search history are referred to, thereby performing a search in an extended range. Therefore, even when the search history size is small, no omission occurs, and searches having a shorter average computation time can be realized.

### Brief Description of Drawings

[FIG. 1] A diagram of an overall configuration of a retrieval device according to the present invention.
[FIG. 2] A functional block diagram illustrating a configuration of the retrieval device according to a first embodiment of the present invention.
[FIG. 3] An explanatory diagram illustrating an example of a name information dictionary.
[FIG. 4] An explanatory diagram illustrating an example of an index for search based on character 2-grams.
[FIG. 5] An explanatory diagram illustrating an example of a search history.
[FIG. 6] An explanatory diagram of a summary table showing a calculation score and a calculation flag.
[FIG. 7] A flow chart illustrating search processing operation of the retrieval device according to the first embodiment.
[FIG. 8] A characteristic graph between order and score of candidates of search results with respect to two inputs.
[FIG. 9] A functional block diagram illustrating a configuration of a retrieval device according to a second embodiment of the present invention.
[FIG. 10] An explanatory diagram illustrating a co-occurrence probability P of a bi-gram language model.
[FIG. 11] An explanatory diagram illustrating an example of a narrowing-down recognition dictionary for recognizing three names and constituent words thereof.
[FIG. 12] A flow chart illustrating search processing operation of the retrieval device according to the second embodiment.
[FIG. 13] A functional block diagram illustrating a configuration of a retrieval device according to a third embodiment of the present invention.
[FIG. 14] A flow chart illustrating search processing operation of the retrieval device according to the third embodiment.

### Description of Embodiments

Hereinbelow, detailed description is given of preferred embodiments of the present invention with reference to the drawings.

### First embodiment

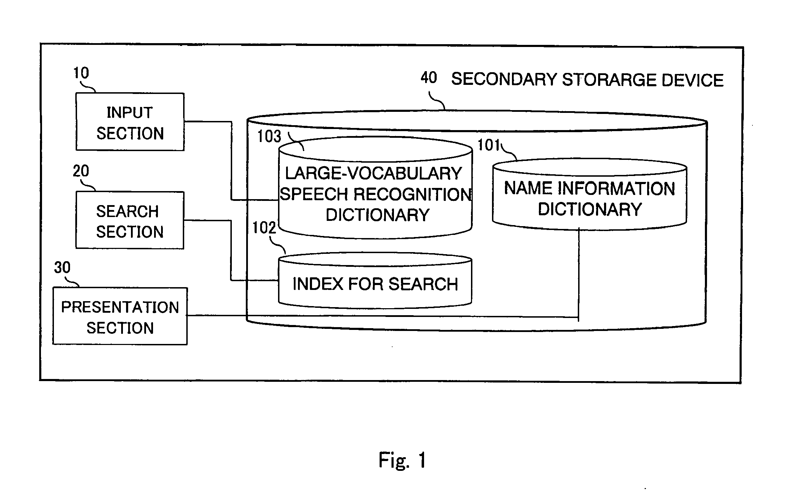

FIG. 1 illustrates an overall configuration of a retrieval device according to the present invention. An input section 10 receives an input by way of, for example, text or voice, and, if necessary, refers to a large-vocabulary speech recognition dictionary 103 to convert the input to a format recognizable by a search section 20. The search section 20 refers to an index 102 for search and performs fuzzy search. A presentation section 30 refers to a name information dictionary 101 and presents, to a user, a name obtained as a result of the search made by the search section 20 and related information thereof.

The name information dictionary 101, the index 102 for search, and the large-vocabulary speech recognition dictionary 103 are created from data of search target. As the search target becomes larger, the name information dictionary 101, the index 102 for search, and the large-vocabulary speech recognition dictionary 103 also become larger in data size, and are thus located in a secondary storage device 40.

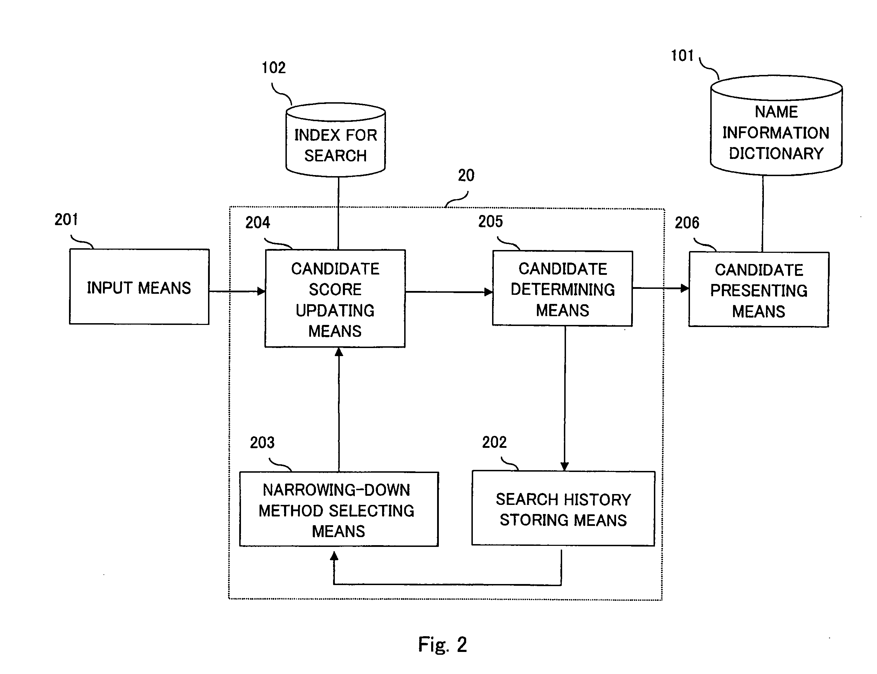

FIG. 2 is a functional block diagram illustrating a configuration of the retrieval device according to a first embodiment of the present invention.
The retrieval device is configured by: input means 201, search history storing means 202, narrowing-down method selecting means 203, candidate score updating means 204, and candidate determining means 205, which are an example of constituent means of the name information dictionary 101, the index 102 for search, and the input section 10; and candidate presenting means 206, which is an example of constituent means of the presentation section 30.

A distinctive feature of the present invention is that the retrieval device is provided with the narrowing-down method selecting means 203, and a narrowing-down method is determined according to a search history read from the search history storing means 202. Hereinbelow, operation of each functional block is described.

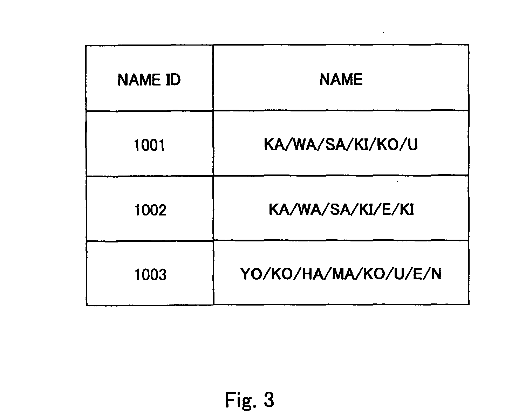

The name information dictionary 101 stores name information to be presented to a user, such as a representation or a pronunciation which corresponds to a name identification (ID). FIG. 3 illustrates an example of the name information dictionary 101 containing the name ID and a reading of the name. A result of word segmentation, the representation, or the like may also be registered in the name information dictionary 101 as long as those pieces of information can be associated with the name ID.

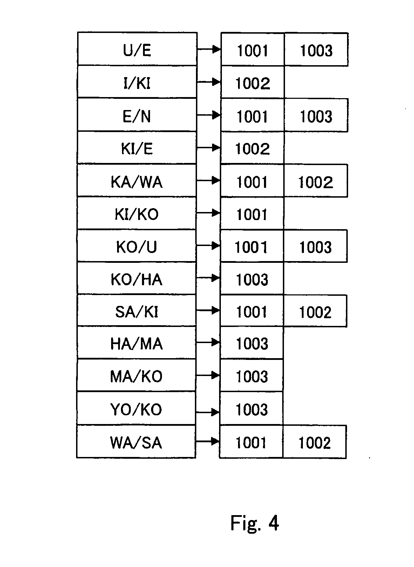

The index 102 for search stores, for partial character strings, corresponding name IDs. The name IDs are referred to based on the partial character strings of an input, thereby updating a score for each name ID. The unit of the partial character string needs to be determined in advance, and, for example, words (in the case of the Japanese language, morphemes) or character N-grams are used. Apart from the name ID, it is also possible to add information on the position in the name, the degree of importance in terms of information retrieval, such as TF-IDF, or the like. FIG. 4 illustrates an example of the index 102 for search based on character 2-grams corresponding to FIG. 3. The index for search enables reference of the corresponding name IDs by using arbitrary two characters.

The input means 201 receives an input from the user, and then outputs a character string for search to the candidate score updating means 204.

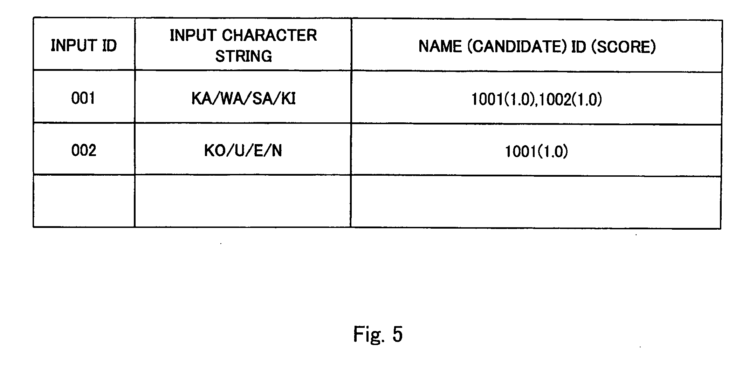

The search history storing means 202 stores a history of searches made so far by the user. The search history includes input IDs, character strings input by the user, and the name IDs constituting search results at that time point and scores thereof. Every time a narrowing-down is performed, those items are added to the search history. When the narrowing-down is canceled, candidates in the search history are all cleared. The search history is ended when an arbitrary threshold value of the score or the number of candidates which can be presented is reached. FIG. 5 is an example of the search history.

When the search history is stored in the search history storing means 202, the narrowing-down method selecting means 203 selects a narrowing-down method based on the number of candidates, the scores, or the like which are stored in the search history storing means 202.

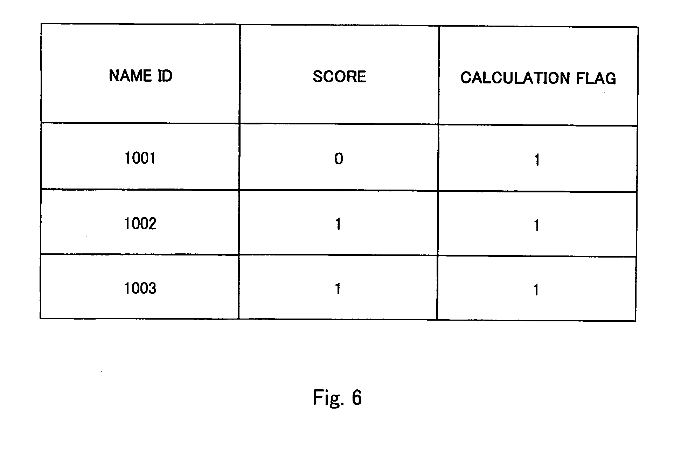

With regard to the character string acquired from the input means 201, the candidate score updating means 204 updates the scores of the name IDs in a summary table provided to the candidate score updating means 204, based on the partial character strings constituting the character string. The summary table is provided with the score for each name ID and a calculation flag for indicating that the name ID is set as a target of calculation by the narrowing-down. FIG. 6 is an example illustrating a calculation score and the calculation flag of the summary table. When there is no search history, the scores of all the name IDs in the summary table are cleared, and the calculation flags of the summary table are set.

In order to present candidates to the user in order from a candidate whose score acquired by the candidate score updating means 204 has exceeded a predetermined value, the candidate determining means 205 extracts, from the summary table, a predetermined number of candidates or less and the name IDs of the candidates held for the retrieval and the scores thereof, and then outputs those extracted items to the candidate presenting means 206 and the search history storing means 202.

The candidate presenting means 206 refers to the name information dictionary 101, to thereby present, to the user, names corresponding to a name ID list acquired from the candidate determining means 205.

Next, description is given of operation of the retrieval device according to the first embodiment of the present invention.

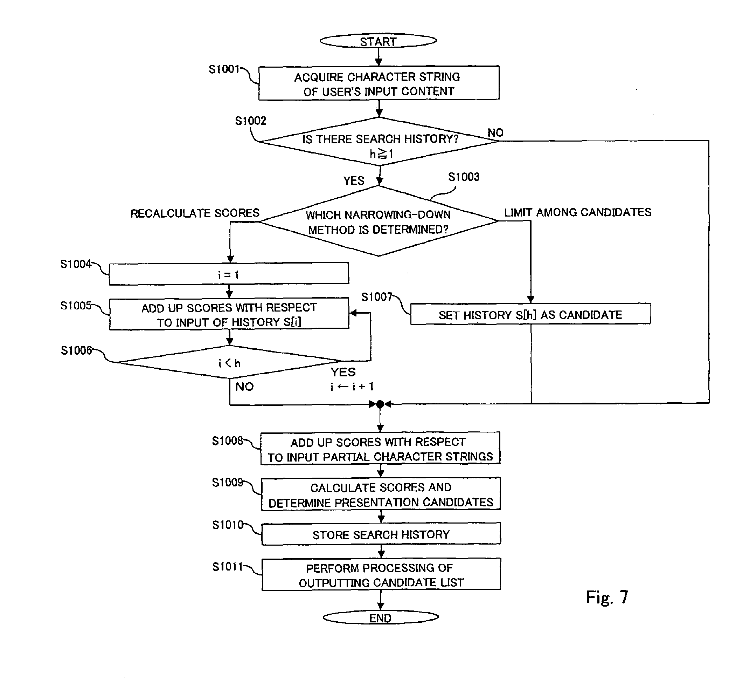

FIG. 7 is a flow chart illustrating search processing operation of the retrieval device according to the first embodiment. Here, it is assumed that a search history S[i] (i=1...h) corresponding to h times of searches is stored in the search history storing means 202.

The input means 201 acquires a character string input by the user, and issues a search request (Step S1001).

In response to the search request, the narrowing-down method selecting means 203 refers to the search history storing means 202 to check whether or not there is a search history (whether or not the number h of searches is equal to or larger than 1) with respect to the input character string (Step S1002). When the number of searches is 0, the calculation flag for indicating the search target is set for all candidates in the summary table, and the scores are cleared to 0. Then, the processing proceeds to Step S1008.

When the number of searches is equal to or larger than 1, the narrowing-down method selecting means 203 refers to at least one of a total length of the input character string in the search history stored in the search history storing means 202, the number of candidates of the last search, and a score distribution of the candidates of the last search, and then selects the narrowing-down method from the following methods. Those methods are: (1) performing a search again based on the inputs made in the past (recalculating the scores in the summary table); and (2) limiting the search targets to top-ranked candidates (limiting candidates to those held in the search history storing means 202) (Step S1003). Details of the selection of the narrowing-down method is described later. In the case of recalculating the scores, the processing proceeds to Step S1004. In the case of limiting candidates to those held in the search history storing means 202, the processing proceeds to Step S1007.

When the recalculation of the scores is selected, the score is recalculated for each name ID of the summary table based on the inputs made in the past searches. First, the calculation flag is set for all the candidates in the summary table, and a number i of the past search to be referred to is set to 1 (Step S1004).

Subsequently, the candidate score updating means 204 reads partial character string indices of the index 102 for search based on the input character string contained in information on the search history S[i], and adds up the score for each candidate (Step S1005).

When the number i of the past search to be referred to is smaller than the number h of stored searches, i is incremented by 1, and the processing returns to Step S1005. Otherwise, the processing proceeds to Step S1008 (Step S1006). As a result, the name ID of the candidate is provided with a score obtained by taking into account the input character strings of all the past searches.

When the narrowing-down method is selected to be the method of limiting candidates to those held in the search history storing means 202, the candidate score updating means 204 sets the calculation flag for the name IDs held in the latest search history S[h] of the summary table, and updates the score (Step S1007).

The candidate score updating means 204 acquires partial character strings for referring to the index 102 for search, which correspond to the character string acquired from the input means 201, and then refers to the index 102 for search, to thereby add up the scores based on the partial character strings (Step S1008).

The candidate determining means 205 extracts, from the summary table, the name IDs for presentation of the predetermined number of candidates or less and the scores thereof so as to present the candidates to the user in order from a candidate whose score acquired by the candidate score updating means 204 has exceeded the predetermined threshold, thereby determining presentation candidates (Step S1009).

The search history storing means 202 stores the input character string, the name IDs of the presentation candidates, and the scores thereof, which are extracted from the summary table by the candidate determining means 205 (Step S1010).

The candidate presenting means 206 refers to the name information dictionary 101 to acquire presentation contents such as names corresponding to the name IDs to be presented, and then presents the acquired contents to the user (Step S1011).

### (Criterion for selecting narrowing-down method)

A criterion for selecting the narrowing-down method by the narrowing-down method selecting means 203 of FIG. 2 is described.

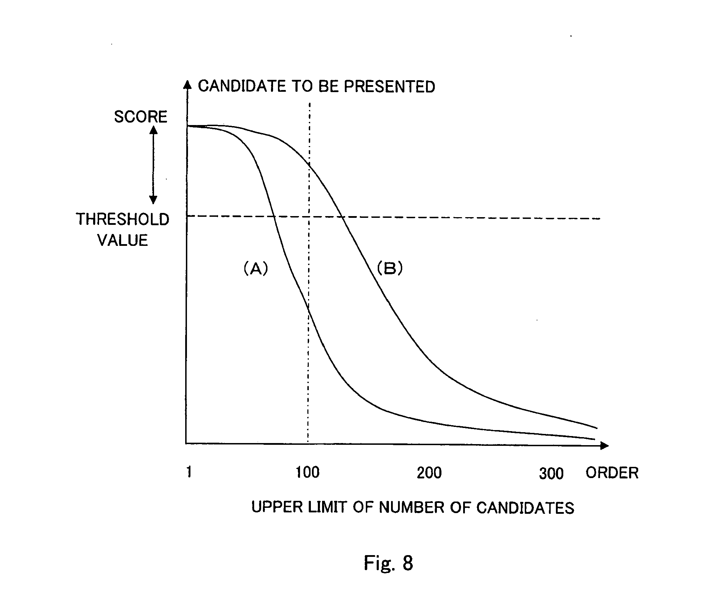

FIG. 8 shows candidates of search results with respect to inputs (A) and (B) with the X-axis representing the order and the Y-axis representing the score. The threshold value is set according to the adequacy of the candidate. Further, in order to secure adequate responsiveness, the number of candidates to be presented at the same time is given the upper limit.

Comparing the two inputs (A) and (B), the number of candidates for the input (A) is smaller than that of the input (B) at the same level of the score. This means that the input (A) is such an expression that appears only in particular names, thereby making the narrowing-down of candidates more effective. On the other hand, as for the input (B), the score of the input (B) is larger than that of the input (A) at the same order. This means that the input (B) is a common expression, thereby making the narrowing-down of candidates less effective.

In the case of the score distribution of the input (A), it is considered that candidates having high adequacy are included within the predetermined threshold value and the predetermined number of candidates. On the other hand, in the case of the score distribution of the input (B), it is considered that there are a large number of other similar candidates in addition to the predetermined number of candidates. In view of the above, in the case of the input (A), it is considered that names having high adequacy are included among the held candidates. Accordingly, with regard to an additional input, the narrowing-down is performed in a limited manner among the held candidates. In this case, with regard to the additional input alone, the calculation is performed by targeting a limited number of candidates, which results in a small amount of computation.

In the case of the input (B), there are a large number of candidates, and hence when there is a limitation on the number of names to be held, there is a fear that names having adequacy fail to be included in the number of held candidates. Accordingly, a search is performed again by using all the inputs included in the search history. Compared to the case of the input (A), the amount of computation is larger in the case of the input (B).

Most of inputs made by the user are of the type (A), in which the narrowing-down is effective, and hence, by combining both types (A) and (B), an average amount of computation is suppressed. In general, in many cases, an input is shorter in length in the case of the type (B) than in the case of the type (A). Accordingly, apart from the number of candidates at the threshold value of the score, the length of an input may be used as a criterion in performing the above-mentioned determination.

Note that, in the description above, the input means 201 acquires a text input made by the user, but the present invention is also applicable to a case where, by referring to the large-vocabulary recognition dictionary 103, a voice input is recognized, and an output is made in the form of text.

As described above, according to the first embodiment, the narrowing-down method is controlled based on the score distribution of candidates and the number of candidates. Thus, when the number of candidates having high adequacy is small, the narrowing-down is performed by limiting the range of target, with the result that the computation time is shortened. On the other hand, when the number of candidates having high adequacy is large, the input character strings in the search history are referred to, thereby performing a search in an extended range. With this configuration, even when the search history size is small, no omission occurs, and searches having a shorter average computation time can be realized.

### Second embodiment

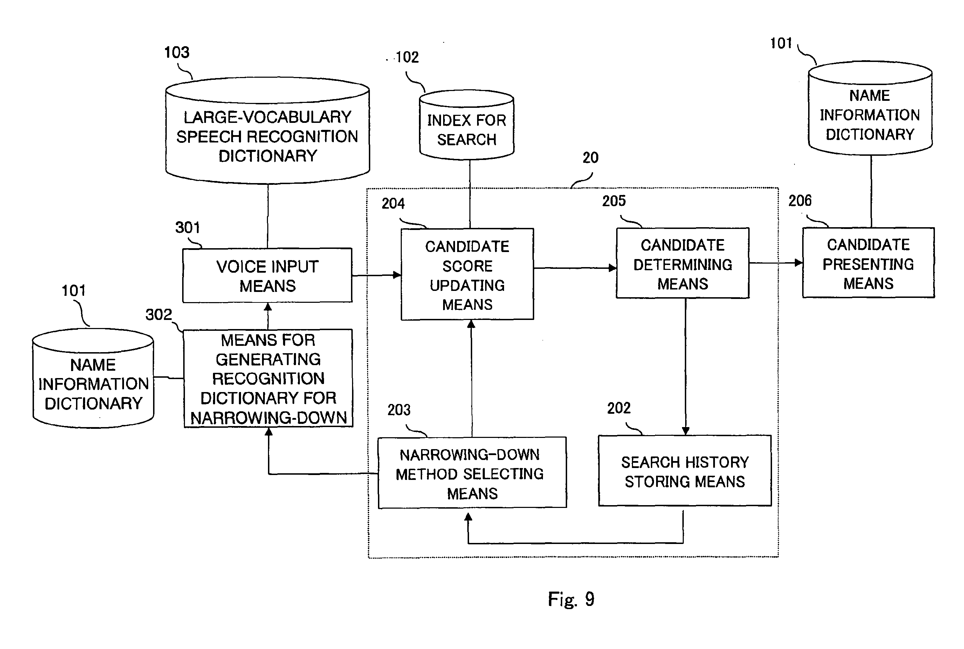

FIG. 9 is a functional block diagram illustrating a configuration of a retrieval device according to a second embodiment of the present invention. The retrieval device according to the second embodiment is additionally provided with means 302 for generating a recognition dictionary for narrowing-down, compared to the retrieval device of the first embodiment. Further, the retrieval device according to the second embodiment is based on the assumption that an input is a voice. Hereinbelow, the same components as those of the first embodiment are denoted by the same numerals as those used in FIG. 2, and description thereof is herein omitted or simplified.

The large-vocabulary recognition dictionary 103 is a dictionary for speech recognition created in advance for recognizing a search expression of the user with respect to name information to be retrieved. In general, in the speech recognition, as the possibility that the speech recognition dictionary can narrow down words which come next becomes higher, a higher recognition rate can be expected. In the description below, as an example of the recognition dictionary, a recognition dictionary which is based on an N-gram language model (N=2) widely used in large-vocabulary speech recognition is described.

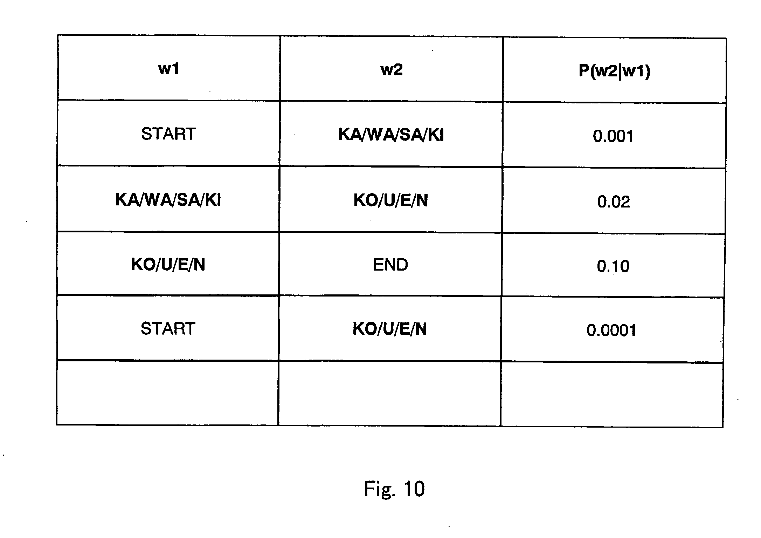

In the N-gram language model, based on the immediately preceding N-1 words, the probability of a word which comes next is estimated. In the case of N=2, the next word is predicted based on the immediately preceding word, which is called bi-gram. In the bi-gram language model, based on a co-occurrence probability P(w2|w1) between two arbitrary words w1 and w2 constituting the recognition dictionary, the word which comes next is predicted from the word currently recognized. FIG. 10 is a diagram illustrating the co-occurrence probability P(w2|w1) between the words w1 and w2 being the recognition target. In the figure, words START and END are pseudo words representing the beginning and the end of a sentence, respectively. The co-occurrence probability P(w2|w1) is calculated based on the frequency of appearance in learning data, such as actual speech contents and names of the search target. However, there is a limitation on the amount of the learning data. For example, 5,000 words have an enormous number of combinations of bi-grams, that is, 25 million bi-grams (square of 5,000).

For this reason, despite having the possibility of co-occurrence, some word strings may fail to appear in the learning data. In this case, when the probability is set to 0, the word string concerned fails to be recognized by any means. To address this, there is used language model smoothing in which a small value of probability is assigned even to a combination of words which does not appear. For example, a word combination of "START" and "(ko/u/e/n)" in FIG. 10 does not exist in the learning data, and is thus assigned a small value of probability.

Voice input means 301, which is one embodiment of the input section 10, receives a voice input of the user, and performs speech recognition by referring to the recognition dictionary, to thereby output a character string. The recognition dictionary provides an effect of increasing the recognition rate by narrowing down possible speeches by the user. When the above-mentioned means 302 for generating a recognition dictionary for narrowing-down outputs the recognition dictionary, the recognition dictionary is referred to. Otherwise, the large-vocabulary recognition dictionary 103, which is created in advance for covering a variety of search expressions by the user, is referred to.

General speech recognition methods using recognition dictionaries are described in detail in Non Patent Literature 4 and Non Patent Literature 5.

Non Patent Literature 4: "Fundamentals of Speech Recognition (Vol. 1 & 2)", Lawrence Rabiner, Biing-Hwang Juang, translated under supervision of Sadaoki Furui, NTT Advanced Technologies
Non Patent Literature 5: "SPOKEN LANGUAGE PROCESSING -A guide to Theory, Algorithm and System Development-", Xuedong Huang, Alex Acero, Hsiao-Wuen Hon, Prentice Hall

When a narrowing-down input has been received, the narrowing-down method selecting means 203 determines whether or not to create a recognition dictionary for narrowing-down according to the narrowing-down method determined based on the search history stored in the search history storing means 202.
When the narrowing-down method selected by the narrowing-down method selecting means 203 is for limiting candidates to those stored in the search history storing means 202, the means 302 for generating a recognition dictionary for narrowing-down acquires target name IDs and the name information corresponding thereto, to thereby generate a dictionary for narrowing-down based on the name information 101.

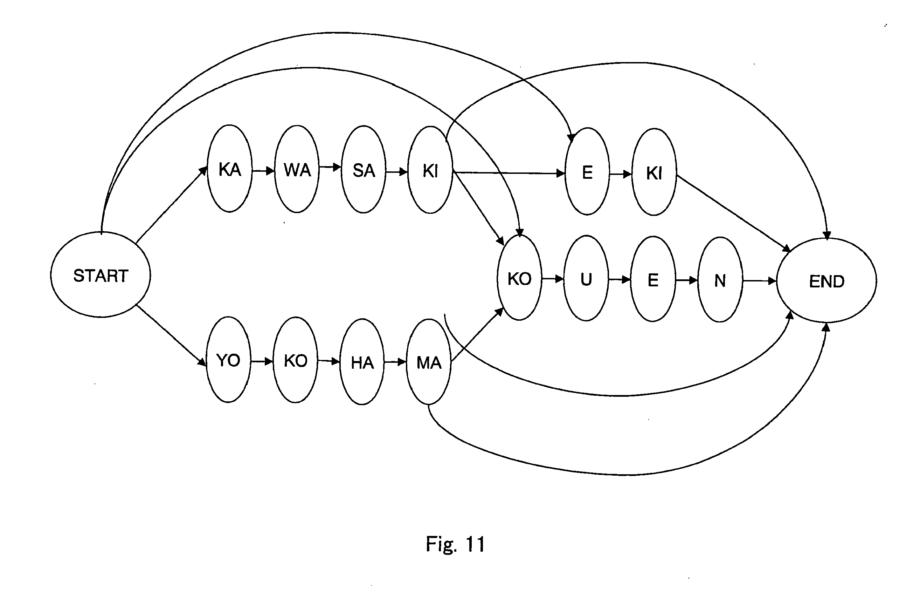

FIG. 11 illustrates an example of the recognition dictionary for narrowing-down, which recognizes the three names illustrated in FIG. 3 and words constituting those names. The speech recognition targets are paths from a node represented by "START" to a node represented by "END". In the paths, nodes located therealong and represented by katakana represent units of speech recognition. In the figure, paths which use words as the unit and skip those nodes are set, and hence it is possible to recognize partial expressions. Further, a syllable common to "ka/wa/sa/ki" and "yo/ko/ha/ma", that is, the ending thereof "ko/u/e/n", is subjected to merging, with the result that the size of the network is made smaller.

The recognition dictionary expressed by the network described above may be created so that only a speech related to the narrowing-down target can be recognized. Thus, compared to the large-vocabulary speech recognition dictionary 103 which considers all the search targets to recognize a variety of expressions, the recognition dictionary for narrowing-down is made remarkably compact, and the recognition rate with respect to the narrowing-down targets becomes higher. However, when the dictionary is created, such an amount of computation that corresponds to the number of target names is required, and hence when the number of narrowing-down targets is large, it is difficult to create a dictionary in a short period of time.

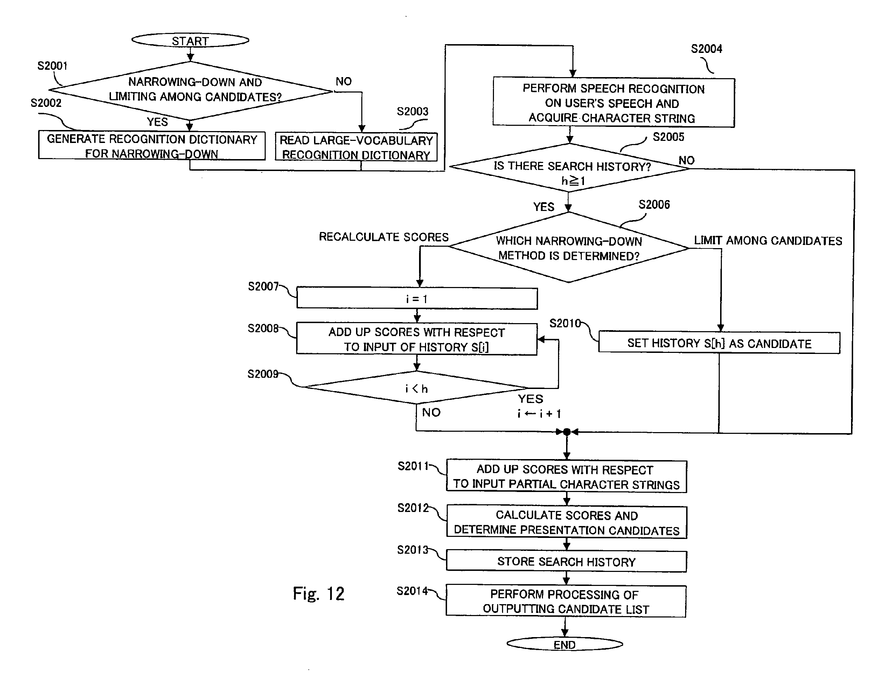

Next, description is given of operation of the retrieval device according to the second embodiment of the present invention. FIG. 12 is a flow chart illustrating search processing operation of the retrieval device according to the second embodiment. Symbols h and S[i](i=1...h) represent the same as in FIG. 7.

The means 302 for generating a recognition dictionary for narrowing-down refers to the states of the search history storing means 202 and the narrowing-down method selecting means 203, to thereby check whether or not the narrowing-down is set and the processing of limiting candidates to those held in the search history storing means 202 is set (Step S2001).
In the case of performing the narrowing-down and limiting candidates to those held in the search history storing means 202, the means 302 for generating a recognition dictionary for narrowing-down refers to the name information dictionary 101 and the search history storing means 202, to thereby generate a recognition dictionary which can recognize such expressions that may possibly appear in target candidates, and then sets the generated recognition dictionary as the recognition dictionary of the voice input means 301 (Step S2002).
Otherwise, the voice input means 301 reads the large-vocabulary speech recognition dictionary 103 (Step S2003).

The voice input means 301 performs speech recognition with respect to a speech of the user based on the set recognition dictionary, acquires a character string of a recognition result, and outputs the character string to the candidate score updating means 204, thereby making a search request (Step S2004).
First, the candidate score updating means 204 checks whether or not there is a search history (whether or not the number h of searches is equal to or larger than 1) in the search history storing means 202 with regard to the search request (Step S2005). When the number of searches is 0, the calculation flag for indicating a search target is set for all the candidates in the summary table, and the scores are cleared to 0. Then, the processing proceeds to Step S2012.

When the number of searches is equal to or larger than 1, the narrowing-down method selecting means 203 refers to at least one of a total length of the input character string stored in the search history storing means 202, the number of candidates of the last search, and a score distribution of the candidates of the last search, and then selects the narrowing-down method from the following methods. Those methods are: (1) performing a search again based on the inputs made in the past (recalculating the scores in the summary table); and (2) limiting the search targets to top-ranked candidates (limiting candidates to those held in the search history storing means 202) (Step S2006). In the case of recalculating the scores, the processing proceeds to Step S2007. In the case of limiting candidates to those held in the search history storing means 202, the processing proceeds to Step S2010.

When the recalculation of the scores is selected, the calculation flag is set for all the candidates in the summary table, and the scores are recalculated by referring to the history of the past searches stored in the search history storing means 202. First, the number i of the past search to be referred to is set to I (Step S2007).
Subsequently, the candidate score updating means 204 reads partial character string indices of the index for search based on the input character string contained in information on the search history S[i], and adds up the score for each candidate (Step S2008).
When the number i of the past search to be referred to is smaller than the number h of searches, i is incremented by 1, and the processing returns to Step S2008. Otherwise, the processing proceeds to Step S2011 (Step S2009). As a result, the name ID of the candidate is provided with a score obtained by taking into account the input character strings of all the past searches in the summary table.

In the case of limiting candidates to those held in the search history storing means 202, the candidate score updating means 204 sets the calculation flag for the name IDs held in the latest search history S[h], and updates the score (Step S2010).
The candidate score updating means 204 acquires partial character strings for referring to the index for search, which correspond to the character string acquired from the input means 301, and then refers to the index 102 for search, to thereby add up the scores based on the partial character strings (Step S2011).

The candidate determining means 205 extracts, from the summary table, the name IDs for presentation of the predetermined number of candidates or less and the scores thereof so as to present the candidates to the user in order from a candidate whose score acquired by the candidate score updating means 204 has exceeded the predetermined threshold, thereby determining presentation candidates (Step S2012).
The search history storing means 202 stores the input character string, the name IDs of the presentation candidates, and the scores thereof, which are extracted by the candidate determining means 205 (Step S2013).
The candidate presenting means 206 refers to the name information dictionary 101 to acquire presentation contents such as names corresponding to the name IDs to be presented, which are extracted by the candidate determining means 205, and then presents the acquired contents to the user (Step S1014).

As described above, according to the second embodiment, the dictionary for narrowing-down is generated according to the search history in consideration of the number of candidates. With this configuration, the recognition dictionary, which targets a limited number of names, is dynamically generated only when there are a limited number of targets, which results in improved recognition accuracy without a need for a long processing time. When the number of candidates is large, it takes time to generate the recognition dictionary, and also the effect of narrowing down candidates to a limited number becomes relatively small. Hence, the recognition dictionary for narrowing-down is not generated.

### Third embodiment

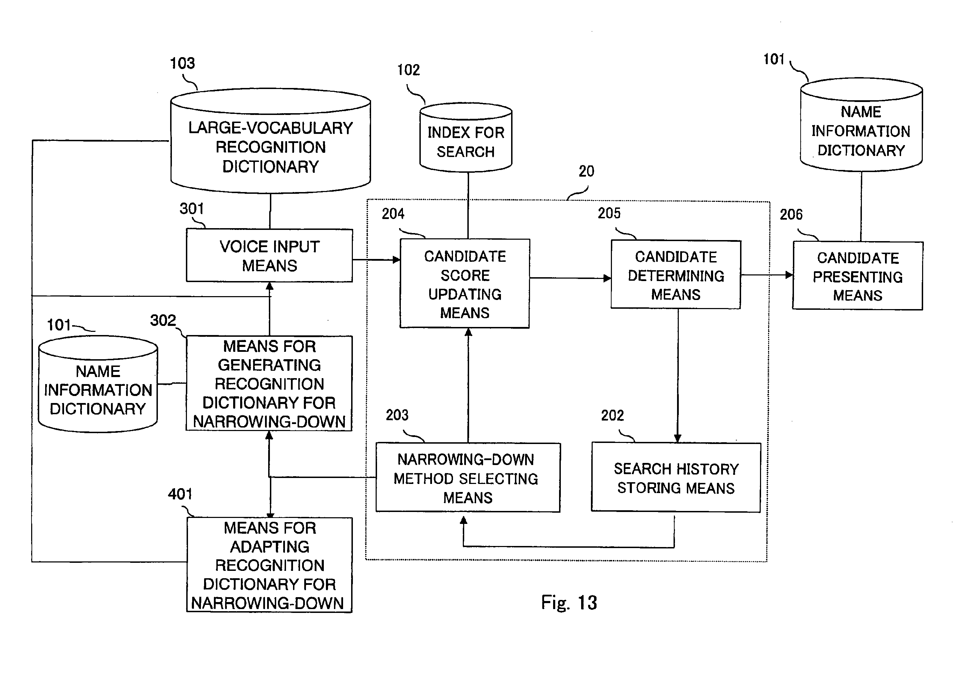

FIG. 13 is a functional block diagram illustrating a configuration of a retrieval device according to a third embodiment of the present invention. The retrieval device according to the third embodiment is additionally provided with means 401 for adapting a recognition dictionary for narrowing-down, compared to the retrieval device of the second embodiment. Hereinbelow, the same components as those of the second embodiment are denoted by the same numerals as those used in FIG. 9, and description thereof is herein omitted or simplified.

The voice input means 301 receives a voice input of the user, and performs speech recognition by referring to the recognition dictionary, to thereby output a character string. As for the recognition dictionary, when there is no search history, the voice input means 301 refers to the large-vocabulary recognition dictionary 103. When there is a search history, based on the narrowing-down method selecting means 203, the voice input means 301 refers to the recognition dictionary output from any one of the means 301 for generating a recognition dictionary for narrowing-down and the means 401 for adapting a recognition dictionary for narrowing-down.

In response to an instruction from the narrowing-down method selecting means 203, the means 401 for adapting a recognition dictionary for narrowing-down refers to the input character strings in the search history, and adapts, for the narrowing-down, the probabilities of words or word strings provided by the large-vocabulary recognition dictionary 103. Specifically, when the recognition dictionary uses the bi-gram language model, the appearance probability of an expression which follows an input of the last speech recognition result stored in the search history is made higher. For example, in the bi-grams illustrated in FIG. 10, when the immediately preceding speech is "ka/wa/sa/ki", the probability of (w1, w2)=(ka/wa/sa/ki, ko/u/e/n) is 0.2. At the time of the narrowing-down, considering the fact that a word which follows the immediately preceding speech is more likely to appear, the probability of (w1, w2)=(START, ko/u/e/n), which is obtained by replacing "ka/wa/sa/ki" with START, is increased. As a result, it is possible to obtain a higher recognition rate for a narrowing-down speech, compared to the case of using the large-vocabulary recognition dictionary 103 capable of recognizing a variety of expressions.

In the adaptation described above, the probabilities of the already-constructed large-vocabulary recognition dictionary are partially adjusted based on the character string in the search history held in the search history storing means 202. For this reason, the effect of improving accuracy by the narrowing-down is smaller compared to the case of recreating a dictionary, but, regardless of the number of candidates of a search result, it is possible to perform the adaptation with a fixed amount of computation.

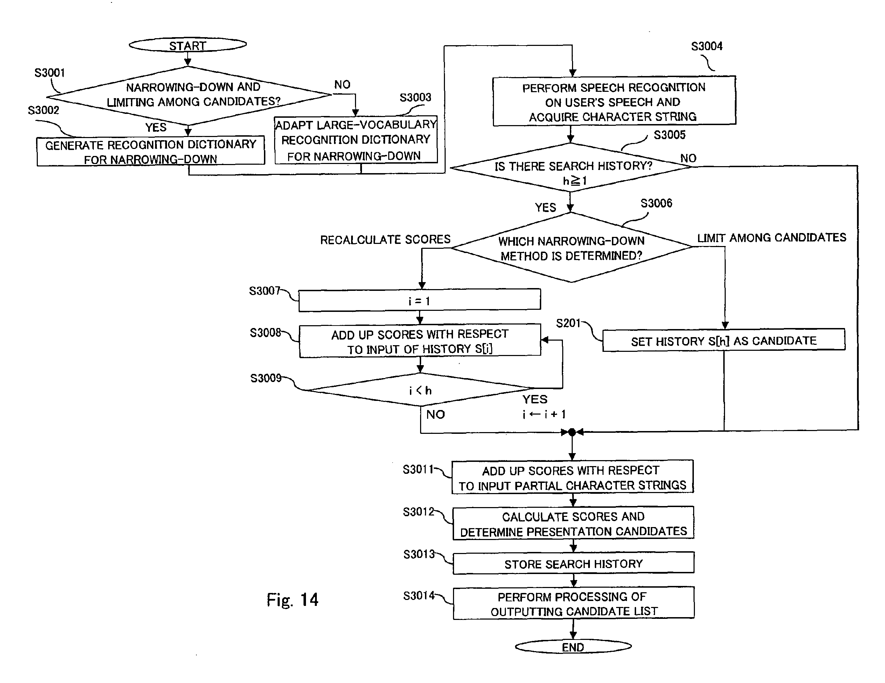

FIG. 14 is a flow chart illustrating search processing operation of the retrieval device according to the third embodiment. In the figure, symbols h and S[i](i=1...h) represent the same as in FIG. 12.
The means 302 for generating a recognition dictionary for narrowing-down refers to the states of the search history storing means 202 and the narrowing-down method selecting means 203, to thereby check whether or not the narrowing-down is set and the processing of limiting candidates is set (Step S3001).

In the case of performing the narrowing-down and limiting candidates, the means 302 for generating a recognition dictionary for narrowing-down refers to the name information dictionary 101 and the search history storing means 202, to thereby generate a recognition dictionary which can recognize such expressions that may possibly appear in target candidates, and then sets the generated recognition dictionary as the recognition dictionary of the voice input means 301 (Step S3002).
Otherwise, the means 401 for adapting a recognition dictionary for narrowing-down reads the large-vocabulary recognition dictionary 103, and adapts, for the narrowing-down, the probabilities of word co-occurrence in the recognition dictionary based on the character string described in the search history, thereby setting the recognition dictionary as an adapted recognition dictionary of the voice input means 301 (Step S3003).

The voice input means 301 performs speech recognition with respect to a speech of the user based on the set recognition dictionary and acquires a character string of a recognition result (Step S3004).
First, the candidate score updating means 204 checks whether or not there is an input history (whether or not the number h of searches is equal to or larger than 1) in the search history storing means 202 with regard to the search request (Step S3005). When the number of searches is 0, the calculation flag for indicating a search target is set for all the candidates, and the scores are cleared to 0. Then, the processing proceeds to Step S3012.

When the number of searches is equal to or larger than 1, the narrowing-down method selecting means 203 refers to at least one of a total length of the input character string stored in the input history, the number of candidates of the last search, and a score distribution of the candidates of the last search, and then selects the narrowing-down method from the following methods. Those methods are: (1) performing a search again based on the inputs made in the past (recalculating the scores in the summary table); and (2) limiting the search targets to top-ranked candidates (limiting candidates to those held in the search history storing means 202) (Step S3006). In the case of recalculating the scores, the processing proceeds to Step S3007. In the case of limiting candidates to those held in the search history storing means 202, the processing proceeds to Step S3010.

When the recalculation of the scores is selected, the calculation flag is set for all the candidates in the summary table, and the scores are recalculated by referring to the history of the past searches. First, the number i of the past search to be referred to is set to 1 (Step S3007).
Subsequently, the candidate score updating means 204 reads partial character string indices based on the input character string contained in information on the search history S[i], and adds up the score for each candidate (Step S3008).
When the number i of the past search to be referred to is smaller than the number h of searches, i is incremented by 1, and the processing returns to Step S3008. Otherwise, the processing proceeds to Step S3011 (Step S3009). As a result, the name ID of the candidate is provided with a score obtained by taking into account all the past searches in the summary table.

In the case of limiting candidates to those held in the search history storing means 202, the candidate score updating means 204 sets the calculation flag for the name IDs held in the latest search history S[h], and updates the score (Step S3010).
The candidate score updating means 204 acquires partial character strings for referring to the index for search, which correspond to the character string acquired from the input means 201, and then refers to the index 101 for search, to thereby add up the scores based on the partial character strings (Step S3011).

The candidate determining means 205 extracts, from the summary table; the name IDs for presentation of the predetermined number of candidates or less and the scores thereof so as to present the candidates to the user in order from a candidate whose score acquired by the candidate score updating means 204 has exceeded the predetermined threshold, thereby determining presentation candidates (Step S3012).
The search history storing means 202 stores the input character string, the name IDs of the presentation candidates, and the scores thereof, which are extracted by the candidate determining means 205 (Step S3013).

The candidate presenting means 206 refers to the name information dictionary 102 to acquire presentation contents such as names corresponding to the name IDs to be presented, which are determined by the candidate determining means 205, and then presents the acquired contents to the user (Step S1014).

As described above, according to the third embodiment, when the number of candidates is small, the speech recognition dictionary for narrowing-down, which is limited to target candidates, is generated. When the number of candidates is large, the large-vocabulary recognition dictionary 103 is adapted based on the input in the search history. Owing to the use of the recognition dictionary for narrowing-down which focuses on narrowed-down targets, a long period of time is not required for the processing, and also, recognition accuracy is improved compared to the case of referring to the large-vocabulary recognition dictionary.

### Industrial Applicability

The retrieval device according to the present invention may be used as a retrieval device for text or facility names. In particular, the present invention may be suitably used for a relatively small retrieval device integrated into another device.

## Claims

1. A retrieval device, comprising:
input means for receiving an input from a user, and outputting a search request;
search history storing means for storing a search history containing a content of the input from the input means and a candidate list;
narrowing-down method selecting means for selecting a narrowing-down method from two methods according to a content of the search history stored in the search history storing means in response to the search request, the two methods comprising a method of limiting search targets to top-ranked candidates and a method of performing a search again based on inputs made in a past;
candidate score updating means for setting, from the search history, a search candidate and a score thereof according to the selected narrowing-down method, and updating a candidate score based on a character string received from the input means with reference to an index for search;
candidate determining means for determining a candidate to be presented based on a number of candidates and a score distribution which are updated by the candidate score updating means; and
candidate presenting means for presenting, to the user, the candidate determined by the candidate determining means with reference to name information data.

2. A retrieval device according to claim 1, further comprising:
a large-vocabulary recognition dictionary for speech recognition; and
means for generating a recognition dictionary for narrowing-down, which generates, when the narrowing-down method selecting means selects the method of limiting search targets to top-ranked candidates, a recognition dictionary for narrowing-down based on name information on target candidates,
wherein the input means receives a voice, and is configured to:
use the recognition dictionary for narrowing-down when the narrowing-down method selecting means selects the method of limiting search targets to top-ranked candidates; and
otherwise, use the large-vocabulary recognition dictionary to perform the speech recognition, and output text.

3. A retrieval device according to claim 2, further comprising means for adapting a recognition dictionary for narrowing-down, which adjusts, when the narrowing-down method selecting means selects the method of performing a search again based on inputs made in a past, the large-vocabulary recognition dictionary based on the search history so that the large-vocabulary recognition dictionary is adapted to an expected narrowing-down speech, and sets the adjusted large-vocabulary recognition dictionary as an adapted recognition dictionary,
wherein the input means receives a voice, and is configured to read the recognition dictionary for narrowing-down or the adapted recognition dictionary according to the narrowing-down method selecting means, to thereby recognize the voice and output text.
